# EUROPEAN PATENT SPECIFICATION

(11) **EP 4 414 046 B1**
(45) Date of publication and mention of the grant of the patent: **10.09.2025**
(21) Application number: 23156201.8
(22) Date of filing: 13.02.2023
(51) Int. Cl.: B01D 46/10, B01D 46/24, B01D 46/52, B01D 46/88

(54) **FLEXIBLE AIR FILTER ELEMENT**
FLEXIBLES LUFTFILTERELEMENT
ÉLÉMENT DE FILTRE À AIR FLEXIBLE

(43) Date of publication of application: 14.08.2024
(73) Proprietor: MANN+HUMMEL LIFE SCIENCES & ENVIRONMENT HOLDING SINGAPORE PTE. LTD., Singapore 139234 (SG)
(72) Inventor: OTT, Pia, 95126 Schwarzenbach (DE); ROSSBACH, Sandy, 95339 Wirsberg (DE); WEIGERT, Christian, 95463 Bindlach (DE)
(74) Representative: Mann + Hummel Intellectual Property

(56) References cited:
- EP-A1- 1 036 584
- EP-A1- 1 391 233
- EP-A2- 1 431 090
- DE-A1- 102014 017 785
- GB-A- 2 117 663
- US-A- 5 620 505

## Description

### Technical field

The present invention refers to a filter element comprising a pleated filter medium and at least a first flexible side element, which seals pleats of the filter medium at first side face, wherein at least a first end section of the first side element protrudes above first fold edges of the filter medium.

### Background

Such a filter element is known form EP 1 391 233 A1.

Filters for the filtration of an airflow are known in a large number of different design variants. Since the efficiency of filters depends in particular on the size of the filter surface through which the air flows, pleated filter media, i.e. filter media pleated in a zigzag shape, are used for many applications. Depending on the pleat height and the pleat spacing of the pleated filter pack, the effective surface area of the filter medium can be increased.

Depending on the shape and size of installation space available, it may be required that a filter element with its pleated filter pack be fixed in a bent condition in the associated filter housing. Likewise, it may be required to bend the filter element for insertion into the filter housing. In the filter housing, the pleated filter pack can then be used in a flat shape or in a bent shape.

It was found that protruding parts of sidebands, which abut a housing, are often subject to high stress during mounting or removal of the filter element. On the one hand, this is due to the forces exerted by the operator to push the filter element into the housing or to remove the filter element from the housing. On the other hand, the pretension of the filter element resulting from its bent shape presses the sideband against the housing. Consequently, a bonding of the sideband to the pleated filter pack can be damaged in particular by repeated installation of the filter element.

A flexible filter element comprising a pleated filter medium which is sealed at both sides by compressible sidebands is known from DE 195 28 670 A1. A similar flexible filter element is disclosed in EP 1 275 428 A1.

EP 1 391 233 A1, mentioned above, describes a filter insert with a substantially plate-shaped filter element, which is provided on at least two opposite side faces with a sealing flap, the height of which is greater than the plate thickness, wherein the projecting part of the sealing flap forms a sealing lip which, in a filter housing accommodating the filter insert, can be applied under elastic prestress to the housing wall in a sealing manner for sealing the filter insert with respect to the housing. The sealing flap projects beyond the filter element on both sides and forms sealing lips on both the upper and lower sides of the plate-like filter element. This allows the filter insert to be mounted in the housing in either orientation of the upper and lower sides.

A filter element having a filter medium is known from EP 1 431 090 A2. The filter element is laterally bounded on at least one side by an edge strip oriented perpendicular to the filter plane defined by the filter medium. A sealing strip is part of the edge strip. It projects beyond the filter plane and is delimited from the rest of the edge strip by a predetermined bending line, which may be formed as an incision facing away from the filter medium. Stiffening of the bending line is provided by a thickened glue bead opposite to the incision.

A filter element with a fold pack having sides is known from US 2009/0044503 A1. A lateral strip at least partially surrounds the sides of the fold pack. The lateral strip is made of thermally deformable lateral strip material. At least one guide section projects laterally from the filter element and is made from the thermally deformable lateral strip material. The guide section and the lateral strip are monolithic with regard to the material wherein the guide section is formed by thermal deformation of the lateral strip. By means of the guide section, the filter element can be secured in a receptacle of a housing.

It is an object of the invention to provide an easy to install filter element with reliable sealing of its pleats.

This is achieved by a filter element according to claim 1 and an air filter according to claim 12. Advantageous embodiments are given in the subclaims and the description.

### Disclosure of the invention

In accordance with the invention, a filter element is provided. The filter element comprises a pleated filter medium and at least a first flexible side element, in particular a first flexible sideband, which seals pleats of the filter medium at a first side face. Thus, the first side element forces an airflow to pass through the filter medium, where particulates or the like are retained. The flexibility of the side element allows the filter element to be bent and/or twisted. This facilitates installation of the filter element with limited access to a housing. Further, the filter element can be used in a deformed, i.e. bent and/or twisted state. Generally, the filter element is not (additionally) deformed by the airflow passing through it during use.

Preferably, the first side element is made from a nonwoven fabric. Such kind of material allows the pleats to be fixed in place eg by use of an adhesive, and to seal up open edges of the pleats, while being flexible enough to allow for significant deformation of the filter element. Further, nonwoven fabric can adapt to the fold edges and allows for local deformation where the fold edges contact the nonwoven fabric.

The first side element may be glued to the filter medium. Adhesive is preferably applied to the first side element. Alternatively or additionally, adhesive may be applied to a side portion of the filter medium. The adhesive used for gluing of the side element to the filter medium can be a hotmelt adhesive.

At least a first end section of the first side element protrudes above first fold edges of the filter medium. The first end section can be used to seal the filter element against a housing.

The first fold edges define an upstream or downstream face of the filter element. Generally, second fold edges define a face opposite to the face defined by the first fold edges, i.e. a downstream or upstream face.

The first and second fold edges can also be referred to as pleat tips. It is understood that the fold edges may be formed as a sharp kink or as a rounded edge.

According to the invention, the first end section is angled towards the filter medium with respect to a main section of the first side element by an angle of at least 5° and at most 85° and the first end section is affixed to the first fold edges. An angle between an end section, here the first end section of the first side element, and the main section of 0° means that the end section is in the same plane as the main section. Preferably, the angle between the first end section and the main section is at least 22°, particularly preferably at least 35°. The angle between the first end section and the main section is preferably at most 67°, particularly preferably at most 55°.

In an undeformed state, the main section of the side element typically extends orthogonal to the fold edges. The angled first end section covers the first fold edges at the upstream or downstream face. Thereby, the first end section slightly overlaps the upstream or downstream face. Thus, it is assured, that the first side face is completely sealed. By fixing, in particular gluing the first angled end section to the first fold edges, a particularly strong connection of the first side element and the filter medium is obtained. Affixing the end section to the fold edges may further advantageously prevent the end section from bending in an unintended direction, thus allowing a reliable sealing of a raw side and a clean side of the air filter. The first angled end section provides an inclined surface, which facilitates mounting or dismounting of the filter element into or from a housing. Furthermore, by arranging the first end section to cover the first fold edges at the upstream or downstream face, the first end section covers an adhesive layer, which may be present between the first side element and the filter medium. Consequently, contact of the adhesive with the housing during installation or removal of the filter element is avoided. Thus, contamination of the housing by abrasion of the adhesive is prevented. Furthermore, the material of the first side element generally exhibits lower friction than the adhesive. Mounting and dismounting of the filter element is therefore further facilitated.

The first end section may at least be partly glued to the first fold edges. The glue or adhesive layer may be provided in any gaps between an end section and its corresponding fold edges, here the first end section and the first fold edges. The adhesive layer may be provided to fill any gaps between the end section and the fold edges. The adhesive layer may be provided in an amount sufficient for the adhesive not to escape the end section, or an end face of the side element as described below if present, thereby avoiding contact of the adhesive with the housing. An excessive amount of adhesive may cause the side element to lose its flexibility. The adhesive layer provided between the end section and its corresponding fold edges may be part of the adhesive used to adhere the side element to the filter medium.

A portion of the filter medium contacting the intersection of the main section and an end section of the first side element is defined as a first edge of the first or second fold edges. As the end section advances from the intersection to an end face of the side element, the distance between the end section and the fold edges increases due to the inclined surface of the angled end section. The glue or adhesive layer provided between the end face and the fold edges may have a thickness that is larger than the layer provided between the intersection and the first edge.

The filter medium may comprise two layers of filter media and filling material, in particular particulate filling material, arranged between the two layers. Each layer of filter media may in turn comprise a plurality of layers of filter media overlaid and stacked to form multilayer filter media. The filter medium may therefore comprise at least two layers of filter media and filling material, in particular particulate filling material, arranged between the layers. The filter media may be selected from filter paper, synthetic fiber, glass fiber, and combinations thereof. Preferably, the filling material comprises adsorbent material, such as activated carbon, ion exchange resin, and combinations thereof. The filling material can for instance remove odors or harmful gases from the airflow, in particular by adsorption to the filling material. With this kind of filter media, it is particularly crucial to ensure reliable and permanent sealing of the filter medium at its sides to prevent the filling material from leaking out, which is achieved by the angled end section affixed to the fold edges.

An end face of the first side element may extend approximately perpendicular, preferably at an angle of 90°+/-30°, particularly preferably at an angle of 90°+/-15°, with respect to the first end section. Consequently, the end face of the side element is generally inclined with respect to the fold edges of the filter medium. The inclined end face facilitates removal of the filter element, in particular if a housing has a protrusion, over which the side element must be moved. Furthermore, an outer edge, which is formed between the first end section and the end face, can be employed as a sealing lip for abutment against the housing.

A second end section of the first side element may protrude above second fold edges of the filter medium. The second end section may be angled towards the filter medium with respect to a main section of the first side element by an angle of at least 5° and at most 85°. Preferably, the angle between the second end section and the main section is at least 22°, particularly preferably at least 35°. The angle between the second end section and the main section is preferably at most 67°, particularly preferably at most 55°. The second end section is affixed to the second fold edges. Further features of the first end section, as described above, may be applied at the second end section as well. The second angled end section is particularly advantageous if the filter element shall contact, in particularly sealingly abut, a housing at the upstream and at the downstream face of the filter element.

The filter element may further comprising a second flexible side element, in particular a second flexible sideband, which seals pleats of the filter medium at a second side face, wherein at least a first end section of the second side element protrudes above the first fold edges of the filter medium, wherein the first end section of the second side element is angled towards the filter medium with respect to a main section of the side element by an angle of at least 5° and at most 85°, and wherein the first end section of the second side element is affixed to the first fold edges. Preferably, the angle between the first end section and the main section of the second side element is at least 22°, particularly preferably at least 35°. The angle between the first end section and the main section of the second side element is preferably at most 67°, particularly preferably at most 55°. The second side element may comprise further features as described above for the first side element. In particular, a second end section of the second side element may protrude above the second fold edges of the filter medium. The second end section may be angled towards the filter medium with respect to a main section of the second side element by an angle of at least 5° and at most 85°. Preferably, the angle between the second end section and the main section of the second side element is at least 22°, particularly preferably at least 35°. The angle between the second end section and the main section of the second side element is preferably at most 67°, particularly preferably at most 55°. The second end section of the second side element is affixed to the second fold edges. The first or second end sections of the second side element may be designed in the same way as the first or second end sections of the first side element.

Preferably, the filter element is plate-shaped in an undeformed state. In the undeformed state, the first and second fold edges may in particular define a flat upstream or a flat downstream face, respectively.

Alternatively, the filter medium may annularly surround a longitudinal axis. The filter element is thus ring shaped, in particular with a cylindrical upstream and downstream face. The annular filter medium may be stabilized by a support tube or the like, which restricts deformation of the filter element. During use, an airflow may pass through the filter medium in the radial direction with respect to the longitudinal axis. In this embodiment, the first flexible side element and the second flexible side element (if provided) are end caps. The advantages for installation, removal and sealing apply here as well.

The invention also refers to an air filter comprising a housing and a filter element as described above. The housing may define a flat or curved interior for reception of the filter element. Generally, an inlet and an outlet are provided at the housing.

The filter element may be installed in the housing in an undeformed state. In other words, the filter element is undeformed, when completely arranged inside the housing. In this embodiment, the flexibility of the filter element can be exploited in particular during installation of the filter element. In particular, the filter element can be deformed prior or during insertion into the housing. The angled end section(s) may contribute to facilitate installation and avoid contact of adhesive, which is applied between the side element and the filter medium, and the housing.

Alternatively, the filter element may be installed in the housing in a deformed state, in particular wherein the filter element is bent around an axis parallel to its fold edges and/or twisted around an axis perpendicular to its fold edges. In other words, the filter element is deformed, when arranged completely inside the housing. In this application, the flexible side element(s) with the angled end section(s) are particularly advantageous. The flexibility of the filter element allows the use thereof in a crooked housing for optimum exploitation of limited space. The sealing and guiding capacity of the angled end section(s) is particularly apparent in this application.

Preferably, an outer edge of the filter element, which is formed between the first end section and an end face of the first side element, sealingly abuts the housing. This allows for reliable sealing of a raw side and a clean side of the air filter. The fact, that the outer edge is formed between two surfaces, which are angled/inclined with respect to the fold edges, is particularly advantageous, if the filter element needs to be inserted beyond a protrusion of the housing. In this application, the oblique arrangement of surfaces adjacent to the outer edge reduces mounting/dismounting forces and leads to a significantly lower risk of tearing off the side element from the filter medium. The housing may comprise two housing parts, a joint of which protrudes towards the interior of the housing.

### Brief description of drawings

Other advantages and features of the invention will be appreciated from the following description of embodiments of the invention with reference to the figures of the drawing, which show significant details, and from the claims. The individual features, as described above or explained below, may each be implemented individually or implemented together in any useful combination in variants of the invention.
- Fig. 1: shows a first embodiment of a filter element according to the invention, in a schematic perspective view;
- Fig. 2: shows a schematic cross section of a pleated filter medium of the filter element of Fig. 1;
- Fig. 3: shows a detail of the filter element of Fig. 1 in the area of a first sideband, in a schematic view;
- Fig. 4: shows a second embodiment of a filter element according to the invention in a bent state, in a schematic perspective view;
- Figs. 5: shows an air filter according to the invention comprising a housing and the filter element of Fig. 4, in a schematic perspective view;
- Fig. 6: shows the air filter of Fig. 5 in a schematic sectional view;
- Fig. 7: shows a detail of the air filter of Fig. 5 during installation, in a schematic sectional view;
- Fig. 8: shows a detail of Fig. 6;
- Fig. 9: shows a second air filter according to the invention, in a schematic perspective view;
- Fig. 10: shows a detail of the air filter of Fig. 9 during installation of a filter element, in a schematic sectional view;
- Fig. 11: shows a detail of Fig. 9, in a sectional view;
- Fig. 12: shows a third air filter according to the invention, during installation of a filter element into a housing, in a schematic perspective view;
- Fig. 13: shows a detail of sealing between a filter element and a housing of the air filter of Fig. 12, in a schematic sectional view;
- Fig. 14: shows a fourth air filter according to the invention, during installation of a filter element into a housing, in a schematic perspective view;

### Detailed description

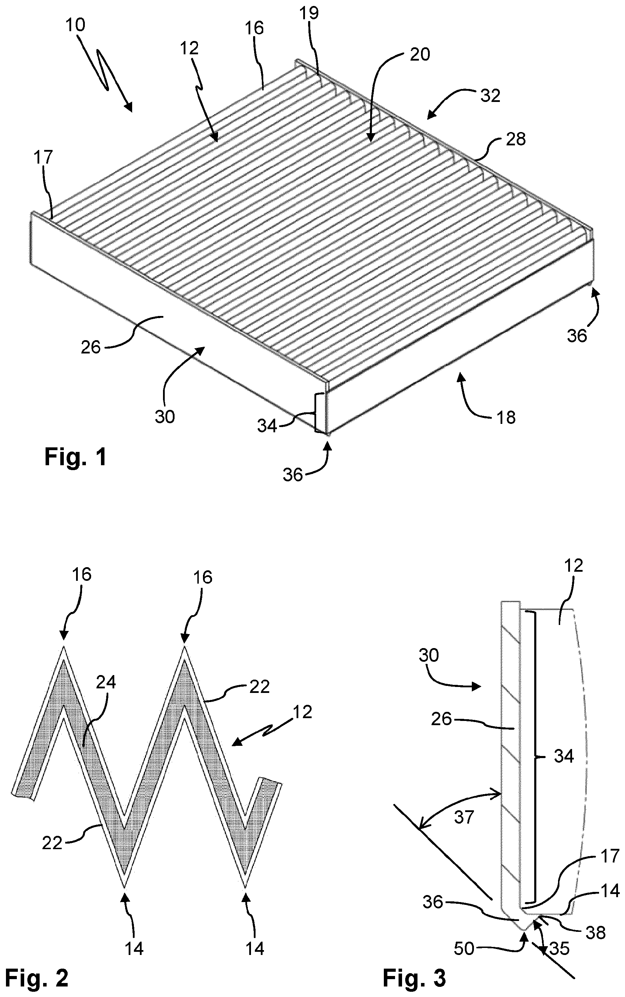

**Figure 1** shows a filter element **10.** The filter element comprises a pleated filter medium **12.** First and second fold edges (or pleat tips) **14, 16** define an upstream and downstream face **18, 20,** respectively, see also **Figure 2****.** The fold edges 14, 16 run parallel to each other. In an undeformed state, which is depicted in Fig. 1, the filter element is plate-shaped; the upstream and downstream face 18, 20 are flat.

As can be seen from Figure 2, the filter medium 12 comprises two layers of filter paper **22.** A filling material **24,** in this embodiment activated carbon particles, is enclosed bewtween the layers of filter paper 22.

The filter element 10 comprises a first and a second side element **26, 28,** here first and second sidebands, which seal the pleats of the filter medium 12 at a first and second side face **30, 32,** respectively, see Figure 1. A first edge **17** of the fold edges 14, 16 is at the first side face 30. The first edge 17 contacts the intersection of a main section **34** and a first end section **36** of the first side element 26. The first edge 17 also contacts the intersection of the main section 34 and a second end section **68** of the first side element 26 if present. A second edge **19** of the fold edges 14, 16 is at the second side face 32. The second edge 19 contacts the intersection of a main section **34** and a first end section **36** of the second side element 28. The second edge 19 also contacts the intersection of the main section 34 and a second end section **68** of the second side element 28 if present.

The side elements 26, 28 are made from flexible material, such as a nonvowen fabric. The side elements 26, 28 are adhered to the filter medium 12 by a hotmelt adhesive. Alternatively, the side elements 26, 28 may be made from a flexible thermoplastic material, such as rubber or hotmelt material, which may melt during production and adhere to the filter medium 12 when hardened.

A main section **34** of the side elements 26, 28 extends in a plane, which is perpendicular to the fold edges 14, 16, at least in the undeformed or flat state of the filter element 10. As is apparent in particular from **Figure 3****,** the side elements 26, 28 protrude beyond the first fold edges 14. In particular, the first side element 26 bends along the first edge 17, while the second side element 28 bends along the second edge 19. A first end section **36** of the first and second side elements 26, 28 is bent towards the filter medium 12. An angle **37** between outer surfaces of the main section 34 and the first end section 36 is preferably about 45°, for instance 45°+/-5°. In particular, the first end sections 36 cover the first fold edges 14 adjacent to the first or second side face 30, 32, respectively. The first end sections 36 are secured to the first fold edges 14, here by means of the hotmelt adhesive. It may be provided that the first fold edges 14 are impressed into the side elements 26, 28. Due to the inclined angle of the first end sections 36, the thickness of adhesive between the edges 17, 19 and the intersection of the main section 34 and first end section 36 is smaller than the thickness of adhesive between the fold edges 14, 16 and an end face 38 of the side element 26, 28.

At the first end section 36, the first and second side element 26, 28 each terminate in an end face **38.** The end face 38 is oriented approximately perpendicular (for instance 90°+/-10°) to the outer surface of the first end section 36 (angle **35).**

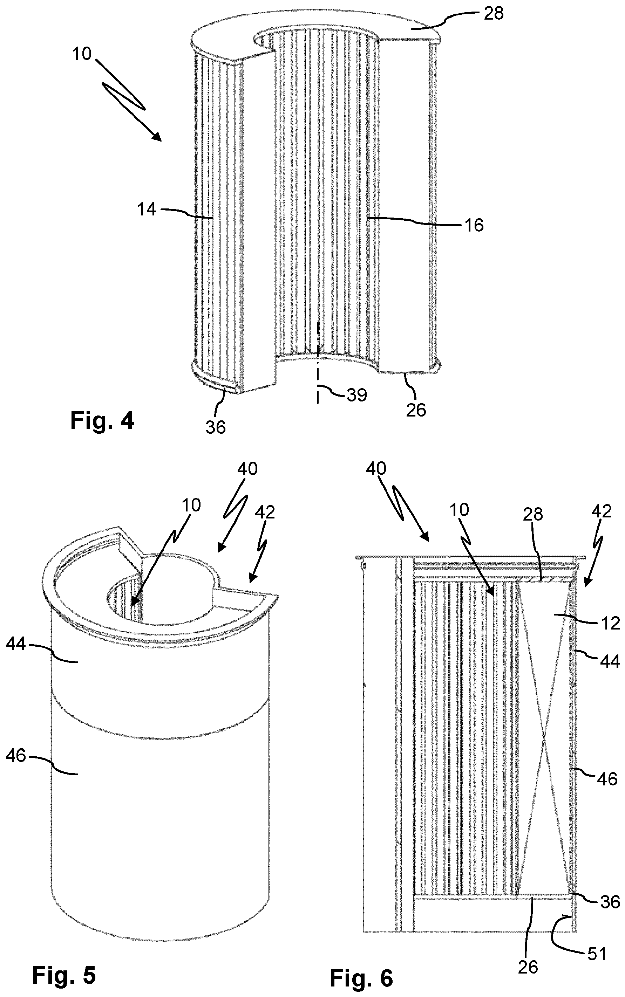

**Figure 4** shows a filter element 10 in a bent state. In particular, the filter element 10 is bent around an axis **39,** which runs parallel to fold edges 14, 16.

The filter element 10 depicted in Figure 4 differs from the filter element 10 shown in Figure 1 in that only the first side element 26 has an angled end section 36; here, the second side element 28 is flat overall. In the bent configuration, the first end section 36 is on the radially outer side of filter element 10 with respect to bending axis 39.

In the bent shape, the filter element 10 may be inserted into a filter housing **42** to form an air filter **40,** see **Figures 5** and **6****.** A cover of housing 42 is not depicted. The first and second side elements 26, 28 sealingly abut the housing 42. An inlet and an outlet of the housing 42 for raw air and filtered air, respectively, are not depicted in Figures 5 and 6.

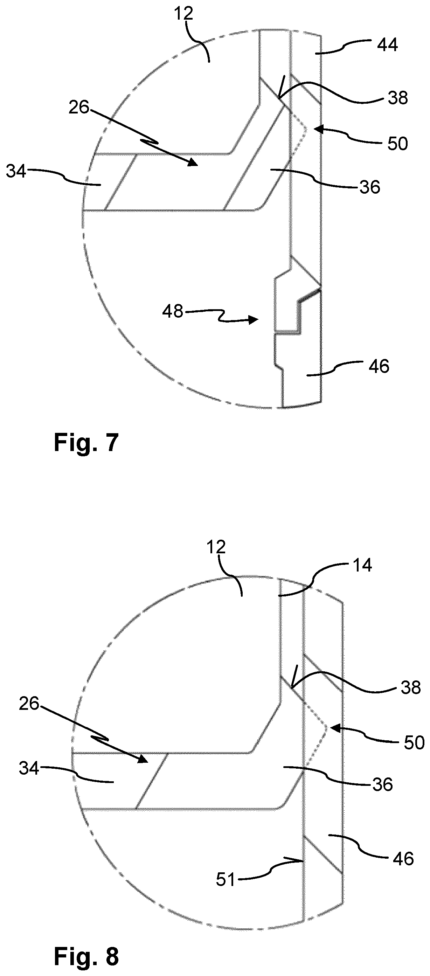

As can be appreciated in particular from Figure 5 and **Figure 7****,** the housing 42 comprises two housing parts **44, 46.** At a joint between the housing parts 44, 46 a protrusion **48** into the interior of the housing is formed. During installation of the filter element 10, the inclination of the first end section 36 facilitates pushing the first side element 26 past the protrusion 48. During removal of the filter element 10, the inclination of the end face 38 facilitates pulling the first side element 26 over the protrusion 48.

In the installed state, an outer edge **50,** which delimits the outer surface of the first end section 36 from the end face 38, sealingly abuts an inner surface **51** of the housing 42, see in particular **Figure 8****.** In Figures 7 and 8, the outer edge 50 is shown in an undeformed configuration to overlap with the housing 40. Actually, the first side element 26 is compressed at the outer edge 50; the resulting contact pressure creates the desired sealing effect.

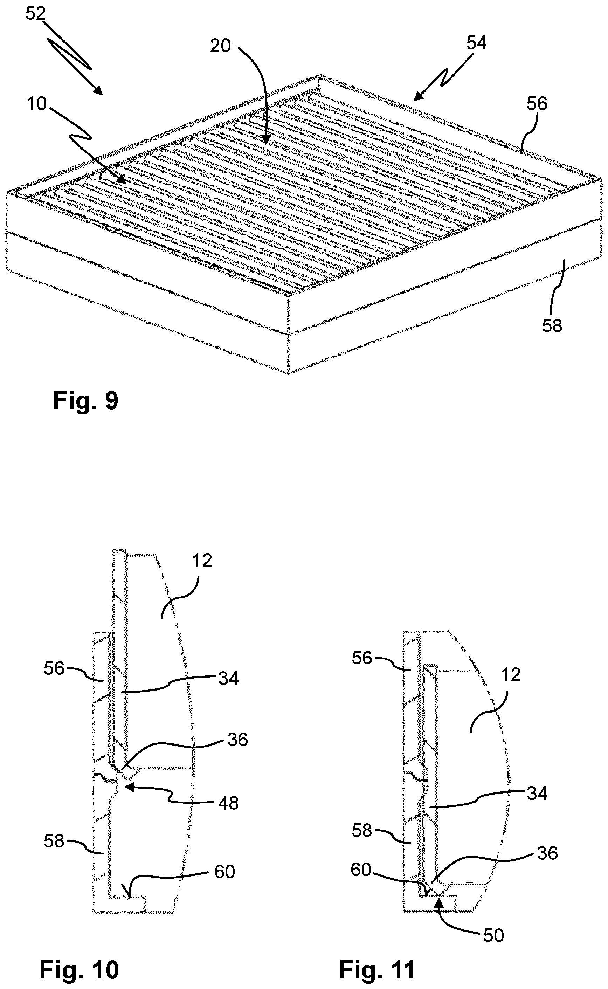

**Figure 9** shows an air filter **52** comprising a housing **54** and a filter element 10, as depicted in Figure 1 and described above. The housing 54 comprises two housing parts **56, 58.** At a joint between the housing parts 56, 58 a protrusion 48 into the interior of the housing is formed, see **Figure 10****.**

With the air filter 52, the filter element 10 is arranged inside the housing 54 in the undeformed, flat state.

For insertion into the housing 54, the filter element 10 may be bent and/or twistet. If enough space above housing 54 is available, the filter element 10 may be pushed into housing 54 in its undeformed, plate-like configuration. Then, the instertion direction is basically perpendicular to the upstream or downstream face 18, 20.

During installation of the filter element 10, the inclination of the first end section 36 facilitates pushing the first side element 26 past the protrusion 48. Since the filter element 10 is installed in its flat configuration, outer edge 50 sealingly abuts a flat sealing surface **60** of housing 54, see **Figure 11****.**

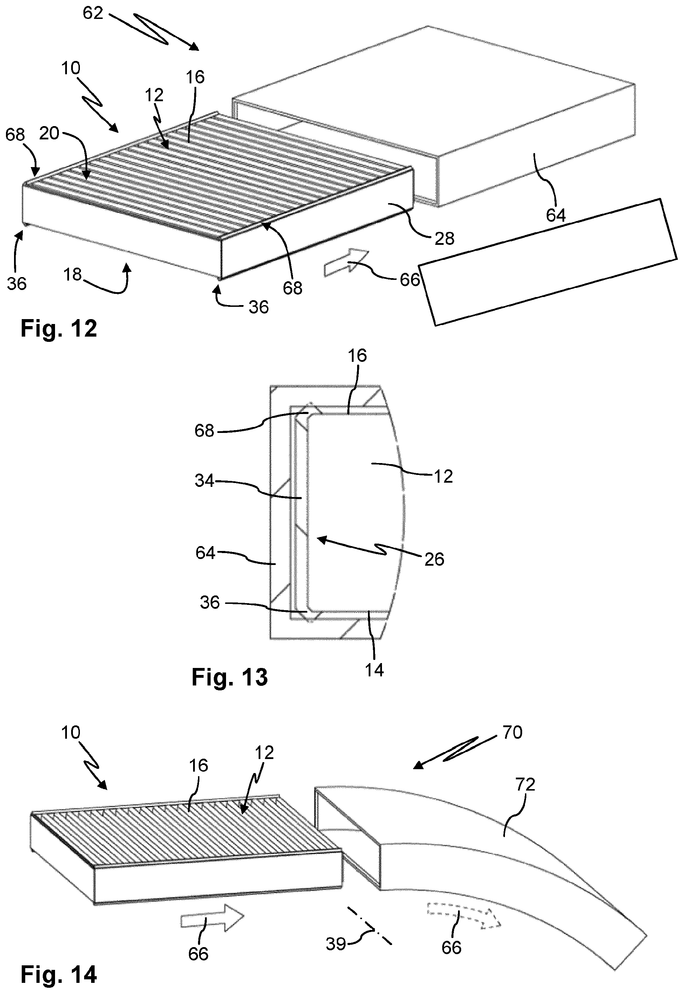

**Figure 12** shows an air filter **62** comprising a cuboid housing **64,** a cover of which is not depicted. Likewise an inlet and an outlet are not depicted in detail. The housing 64 is designed for insertion of a flat filter element 10 in a direction **66** perpendicular to its upstream and downstream face 18, 20.

In the embodiment of Figure 12, the filter element 10 does not only comprise first end sections 36, which are angled towards the filter medium 12, as described above for the filter element 10 depicted in Figure 1. Here, the side elements 26, 28 do also protrude beyond the second fold edges 16 at the downstream face 20, see also **Figure 13****.** Second end sections **68** of the side elements 26, 28 are bent inwards to cover the second fold edges 16 adjacent to the first or second side face 30, 32, respectively. The second end sections 68 are designed in the same way as the first end sections 36. In particluar, the second end sections 68 are adhered to the second fold edges 16.

Both, the first and second end sections 36, 68 of the first and second side elements 26, 28 sealingly abut housing 64, see Figure 13. During installation, contact of adhesive, which is applied between filter medium 12 and side elements 26, 28, and the housing 64 is avoided, since the end sections 36, 68 cover the outer portions of fold edges 14, 16.

**Figure 14** shows an air filter **70** similar to the air filter 62 of Figure 12; in particular the same filter element 10 is used in Figures 12 and 14. Air filter 70 differs from air filter 62 in that its housing **72** is curved along insertion direction 66. Consequently, the filter element 10 is bent during installation and remains bent or flat, depending on the remaining configuration of housing 72 n the completely installed state (not depicted in detail). Here, a bending axis 39 is parallel to the fold edges 14, 16 of filter medium 12. Sealing contact between filter element 10 and housing 72 is established as depicted in Figure 13 and described above.

In summary, the invention refers to a deformable filter element comprising a flexible side element to seal pleats of its filter medium. An end section of the side element is bent over fold edges. The end section and the fold edges are secured to one another. The end section and a main section of the side element, which main section is typically arranged perpendicular to the fold edges, are neither parallel nor perpendicular to each other.

### List of reference signs

Filter element **10**
Filter medium **12**
First fold edges **14**
Second fold edges **16**
First edge **17**
Upstream face **18**
Second edge **19**
Downstream face **20**
Filter paper **22**
Filling material **24**
First side element **26**
Second side element **28**
First side face **30**
Second side face **32**
Main section **34**
Angle **35**
First end section **36**
Angle **37**
End face **38**
Axis **39**
Air filter **40; 52; 62; 70**
Housing **42; 54; 64; 72**
Housing parts **44, 46; 56, 58**
Protrusion **48**
Outer edge **50**
Inner surface **51**
Sealing surface **60**
Insertion direction **66**
Second end section **68**

## Claims

1. Filter element (10) comprising a pleated filter medium (12) and at least a first flexible side element (26), in particular a first flexible sideband, which seals pleats of the filter medium (12) at a first side face (30),
wherein at least a first end section (36) of the first side element (26) protrudes above first fold edges (14) of the filter medium (12),
wherein the first end section (36) is angled towards the filter medium (12) with respect to a main section (34) of the first side element (26) by an angle (37) of at least 5° and at most 85°, and wherein the first end section (36) is affixed to the first fold edges.

2. Filter element (10) according to claim 1, wherein the angle (37) between the first end section (36) and the main section (34) is at least 22°, preferably at least 35°, and/or at most 67°, preferably at most 55°.

3. Filter element (10) according to one of the preceding claims, wherein the first side element (26) is made from a nonwoven fabric.

4. Filter element (10) according to one of the preceding claims, wherein the first side element (26) is glued to the filter medium (12) and the first end section (36) of the first side element (26) is at least partly glued to the first fold edges, in particular wherein a glue layer provided between an end face (38) of the first side element (26) and the first fold edges has a thickness that is larger than the glue layer provided between a first edge (17) of the first fold edges and an intersection of the main section (34) and the first end section (36).

5. Filter element (10) according to one of the preceding claims, wherein the filter medium (12) comprises at least two layers of filter media (22) and filling material (24), in particular particulate filling material, arranged between the layers.

6. Filter element (10) according to claim 5, wherein the filling material (24) comprises adsorbent material, in particular activated carbon, ion exchange resin and combinations thereof.

7. Filter element (10) according to one of the preceding claims, wherein an end face (38) of the first side element (26) extends approximately perpendicular, preferably at an angle (35) of 90°+/-30°, particularly preferably at an angle of 90°+/-15°, with respect to the first end section (36).

8. Filter element (10) according to one of the preceding claims, further comprising a second flexible side element (28), in particular a second flexible sideband, which seals pleats of the filter medium (12) at a second side face (32),
wherein at least a first end section (36) of the second side element (28) protrudes above the first fold edges (14) of the filter medium (12),
wherein the first end section (36) of the second side element (28) is angled towards the filter medium (12) with respect to a main section (34) of the second side element (28) by an angle (37) of at least 5° and at most 85°,
and wherein the first end section (36) of the second side element (28) is affixed to the first fold edges (14).

9. Filter element (10) according to one of the preceding claims, wherein a second end section (68) of the first side element (26), or of the second side element (28) if present, protrudes above second fold edges (16) of the filter medium (12),
wherein the second end section (68) is angled towards the filter medium (12) with respect to a main section (34) of the first side element (26) by an angle (37) of at least 5° and at most 85°, and wherein the second end section (68) is affixed to the second fold edges (16).

10. Filter element (10) according to one of claims 1 to 9, wherein, in an undeformed state, the filter element (10) is plate-shaped.

11. Filter element according to one of claims 1 to 9, wherein the filter medium (12) annularly surrounds a longitudinal axis.

12. Air filter (40; 52; 62; 70) comprising a housing (42; 54; 64; 72) and a filter element (10) according to one of the preceding claims.

13. Air filter (52; 62) according to claim 12, wherein the filter element (10) is installed in the housing (54; 64) in an undeformed state.

14. Air filter (40; 70) according to claim 12, wherein the filter element (10) is installed in the housing (42; 72) in a deformed state, in particular wherein the filter element (10) is bent around an axis (39) parallel to its fold edges (14, 16) and/or twisted around an axis perpendicular to its fold edges (14, 16).

15. Air filter (40; 52; 62; 70) according to one of claims 12 to 14, wherein an outer edge (50) of the filter element (10), which is formed between the first end section (36) and an end face (38) of the first side element (26), sealingly abuts the housing (42; 54; 64; 72).

## Patentansprüche

1. Filterelement (10) umfassend ein gefaltetes Filtermedium (12) und mindestens ein erstes flexibles Seitenelement (26), insbesondere ein erstes flexibles Seitenband, das an einer ersten Seitenfläche (30) Falten des Filtermediums (12) abdichtet,
wobei mindestens ein erster Endabschnitt (36) des ersten Seitenelements (26) über erste Faltkanten (14) des Filtermediums (12) vorsteht,
wobei der erste Endabschnitt (36) gegenüber einem Hauptabschnitt (34) des ersten Seitenelements (26) um einen Winkel (37) von mindestens 5° und höchstens 85° zum Filtermedium (12) hin abgewinkelt ist, und wobei der erste Endabschnitt (36) an den ersten Faltkanten befestigt ist.

2. Filterelement (10) nach Anspruch 1, wobei der Winkel (37) zwischen dem ersten Endabschnitt (36) und dem Hauptabschnitt (34) mindestens 22°, vorzugsweise mindestens 35°, und/oder höchstens 67°, vorzugsweise höchstens 55°, beträgt.

3. Filterelement (10) nach einem der obigen Ansprüche, wobei das erste Seitenelement (26) aus einem Vliesstoff besteht.

4. Filterelement (10) nach einem der obigen Ansprüche, wobei das erste Seitenelement (26) mit dem Filtermedium (12) verklebt ist und der erste Endabschnitt (36) des ersten Seitenelements (26) zumindest teilweise mit den ersten Faltkanten verklebt ist, insbesondere wobei eine zwischen einer Stirnfläche (38) des ersten Seitenelements (26) und den ersten Faltkanten eine vorgesehene Klebstoffschicht eine Dicke hat, die größer ist als die Klebstoffschicht, die zwischen einer ersten Kante (17) der ersten Faltkanten und einem Schnittpunkt des Hauptabschnitts (34) und des ersten Endabschnitts (36) vorgesehen ist.

5. Filterelement (10) nach einem der obigen Ansprüche, wobei das Filtermedium (12) mindestens zwei Schichten aus Filtermedien (22) und zwischen den Schichten angeordnetem Füllmaterial (24), insbesondere partikulärem Füllmaterial, umfasst.

6. Filterelement (10) nach Anspruch 5, wobei das Füllmaterial (24) Adsorptionsmittel, insbesondere Aktivkohle, Ionenaustauscherharz und Verbindungen derselben umfasst.

7. Filterelement (10) nach einem der obigen Ansprüche, wobei eine Stirnfläche (38) des ersten Seitenelements (26) sich annähernd senkrecht, vorzugsweise in einem Winkel (35) von 90°+/-30°, besonders bevorzugt in einem Winkel von 90°+/-15°, zu dem ersten Endabschnitt (36) erstreckt.

8. Filterelement (10) nach einem der obigen Ansprüche, weiterhin umfassend ein zweites flexibles Seitenelement (28), insbesondere ein zweites flexibles Seitenband, das an einer zweiten Seitenfläche (32) Falten des Filtermediums (12) abdichtet,
wobei mindestens ein erster Endabschnitt (36) des zweiten Seitenelements (28) über die ersten Faltkanten (14) des Filtermediums (12) vorsteht,
wobei der erste Endabschnitt (36) des zweiten Seitenelements (28) gegenüber einem Hauptabschnitt (34) des zweiten Seitenelements (28) um einen Winkel (37) von mindestens 5° und höchstens 85° zum Filtermedium (12) hin abgewinkelt ist,
und wobei der erste Endabschnitt (36) des zweiten Seitenelements (28) an den ersten Faltkanten (14) befestigt ist.

9. Filterelement (10) nach einem der obigen Ansprüche, wobei ein zweiter Endabschnitt (68) des ersten Seitenelements (26) oder des zweiten Seitenelements (28), falls vorhanden, über zweite Faltkanten (16) des Filtermediums (12) vorsteht,
wobei der zweite Endabschnitt (68) gegenüber einem Hauptabschnitt (34) des ersten Seitenelements (26) um einen Winkel (37) von mindestens 5° und höchstens 85° zum Filtermedium (12) hin abgewinkelt ist, und wobei der zweite Endabschnitt (36) an den zweiten Faltkanten (16) befestigt ist.

10. Filterelement (10) nach einem der Ansprüche 1 bis 9, wobei das Filterelement (10) in einem unverformten Zustand plattenförmig ist.

11. Filterelement nach einem der Ansprüche 1 bis 9, wobei das Filtermedium (12) eine Längsachse ringförmig umgibt.

12. Luftfilter (40; 52; 62; 70) umfassend ein Gehäuse (42; 54; 64; 72) und ein Filterelement (10) nach einem der obigen Ansprüche.

13. Luftfilter (52; 62) nach Anspruch 12, wobei das Filterelement (10) in einem unverformten Zustand in das Gehäuse (54; 64) eingebaut ist.

14. Luftfilter (40; 70) nach Anspruch 12, wobei das Filterelement (10) in dem Gehäuse (42; 72) in verformtem Zustand eingebaut ist, insbesondere wobei das Filterelement (10) um eine zu seinen Faltkanten (14, 16) parallele Achse (39) gebogen und/oder um eine zu seinen Faltkanten (14, 16) senkrechte Achse verdreht ist.

15. Luftfilter (40; 52; 62; 70) nach einem der Ansprüche 12 bis 14, wobei eine Außenkante (50) des Filterelements (10), die zwischen dem ersten Endabschnitt (36) und einer Stirnfläche (38) des ersten Seitenelements (26) geformt ist, dichtend an dem Gehäuse (42; 54; 64; 72) anliegt.

## Revendications

1. Élément filtrant (10) comprenant un milieu filtrant plissé (12) et au moins un premier élément latéral flexible (26), notamment une première bande latérale flexible, qui rend étanches les plis du milieu filtrant (12) sur une première face latérale (30),
dans lequel au moins une première section d'extrémité (36) du premier élément latéral (26) fait saillie au-dessus des premières arêtes de pliage (14) du milieu filtrant (12),
dans lequel la première section d'extrémité (36) est inclinée vers le milieu filtrant (12) par rapport à une section principale (34) du premier élément latéral (26) d'un angle (37) d'au moins 5° et d'au plus 85°, et dans lequel la première section d'extrémité (36) est fixée aux premières arêtes de pliage.

2. Élément filtrant (10) selon la revendication 1, dans lequel l'angle (37) entre la première section d'extrémité (36) et la section principale (34) est d'au moins 22°, de préférence d'au moins 35°, et/ou d'au plus 67°, de préférence d'au plus 55°.

3. Élément filtrant (10) selon l'une quelconque des revendications précédentes, dans lequel le premier élément latéral (26) est constitué d'un non-tissé.

4. Élément filtrant (10) selon l'une quelconque des revendications précédentes, dans lequel le premier élément latéral (26) est collé au milieu filtrant (12) et la première section d'extrémité (36) du premier élément latéral (26) est collée au moins partiellement aux premières arêtes de pliage, notamment dans lequel une couche de colle prévue entre une face d'extrémité (38) du premier élément latéral (26) et les premières arêtes de pliage a une épaisseur qui est supérieure à la couche de colle prévue entre une première arête (17) des premières arêtes de pliage et une intersection de la partie principale (34) et de la première partie d'extrémité (36).

5. Élément filtrant (10) selon l'une quelconque des revendications précédentes, dans lequel le milieu filtrant (12) comprend au moins deux couches de milieux filtrants (22) et de matériau de remplissage (24), notamment de matériau de remplissage particulaire, disposées entre les couches.

6. Élément filtrant (10) selon la revendication 5, dans lequel le matériau de remplissage (24) comprend un matériau adsorbant, notamment du charbon actif, une résine échangeuse d'ions et des combinaisons de ceux-ci.

7. Élément filtrant (10) selon l'une quelconque des revendications précédentes, dans lequel une face d'extrémité (38) du premier élément latéral (26) s'étend approximativement de manière perpendiculaire, de préférence selon un angle (35) de 90° +/- 30°, de façon particulièrement préférée selon un angle de 90° +/- 15°, par rapport à la première section d'extrémité (36).

8. Élément filtrant (10) selon l'une quelconque des revendications précédentes, comprenant en outre un deuxième élément latéral flexible (28), notamment une deuxième bande latérale flexible, qui rend étanches les plis du milieu filtrant (12) sur une deuxième face latérale (32),
dans lequel au moins une première section d'extrémité (36) du deuxième élément latéral (28) fait saillie au-dessus des premières arêtes de pliage (14) du milieu filtrant (12),
dans lequel la première section d'extrémité (36) du deuxième élément latéral (28) est inclinée vers le milieu filtrant (12) par rapport à une section principale (34) du deuxième élément latéral (28) d'un angle (37) d'au moins 5° et d'au plus 85°,
et dans lequel la première section d'extrémité (36) du deuxième élément latéral (28) est fixée aux premières arêtes de pliage (14).

9. Élément filtrant (10) selon l'une quelconque des revendications précédentes, dans lequel une deuxième partie d'extrémité (68) du premier élément latéral (26) ou du deuxième élément latéral (28), s'il est présent, fait saillie au-dessus des deuxièmes arêtes de pliage (16) du milieu filtrant (12),
dans lequel la deuxième section d'extrémité (68) est inclinée vers le milieu filtrant (12) par rapport à une section principale (34) du premier élément latéral (26) d'un angle (37) d'au moins 5° et d'au plus 85°, et dans lequel la deuxième section d'extrémité (68) est fixée aux deuxièmes arêtes de pliage (16).

10. Élément filtrant (10) selon l'une quelconque des revendications 1 à 9, dans lequel, à l'état non déformé, l'élément filtrant (10) est en forme de plaque.

11. Élément filtrant selon l'une quelconque des revendications 1 à 9, dans lequel le milieu filtrant (12) entoure annulairement un axe longitudinal.

12. Filtre à air (40; 52; 62; 70) comprenant un boîtier (42; 54; 64; 72) et un élément filtrant (10) selon l'une quelconque des revendications précédentes.

13. Filtre à air (52; 62) selon la revendication 12, dans lequel l'élément filtrant (10) est installé dans le boîtier (54; 64) à l'état non déformé.

14. Filtre à air (40; 70) selon la revendication 12, dans lequel l'élément filtrant (10) est installé dans le boîtier (42; 72) dans un état déformé, en particulier dans lequel l'élément filtrant (10) est plié autour d'un axe (39) parallèle à ses arêtes de pliage (14, 16) et/ou est torsadé autour d'un axe perpendiculaire à ses arêtes de pliage (14, 16).

15. Filtre à air (40; 52; 62; 70) selon l'une quelconque des revendications 12 à 14, dans lequel une arête extérieure (50) de l'élément filtrant (10), qui est réalisée entre la première partie d'extrémité (36) et une face d'extrémité (38) du premier élément latéral (26), s'appuie de manière étanche contre le boîtier (42; 54; 64; 72).
